Europäisches Patentamt

European Patent Office

Office européen des brevets

(19)

(11) Veröffentlichungsnummer: **0 250 512**
**B1**

(12) **EUROPÄISCHE PATENTSCHRIFT**

(45) Veröffentlichungstag der Patentschrift: **04.04.90**

(51) Int. Cl.⁵: **A 63 H 19/30**

(21) Anmeldenummer: **87900132.9**

(22) Anmeldetag: **18.12.86**

(86) Internationale Anmeldenummer:
**PCT/EP86/00761**

(87) Internationale Veröffentlichungsnummer:
**WO 87/03817 02.07.87 Gazette 87/14**

(54) **GLEISANORDNUNG FÜR MODELLBAHNEN.**

(30) Priorität: **21.12.85 DE 3545710**

(43) Veröffentlichungstag der Anmeldung:
**07.01.88 Patentblatt 88/01**

(45) Bekanntmachung des Hinweises auf die
Patenterteilung:
**04.04.90 Patentblatt 90/14**

(84) Benannte Vertragsstaaten:
**AT BE CH DE FR GB IT LI LU NL SE**

(56) Entgegenhaltungen:
**CH-A- 310 527**
**GB-A- 651 128**
**GB-A-2 065 484**
**US-A-3 160 936**

(73) Patentinhaber: **Schuller, Wolfgang**
**Am Parkfriedhof 26**
**D-4300 Essen 1 (DE)**

(72) Erfinder: **Schuller, Wolfgang**
**Am Parkfriedhof 26**
**D-4300 Essen 1 (DE)**

(74) Vertreter: **Zenz, Joachim Klaus et al**
**Am Ruhrstein 1**
**D-4300 Essen 1 (DE)**

Courier Press, Leamington Spa, England.

**Beschreibung**

Die Erfindung betrifft eine Gleisanordnung für Modellbahnen mit zwei Schienenprofilen, die auf Schwellen gehaltert sind, wobei in der Sohlfläche jedes Schienenfußes eine zur Schienen längsachse parallel verlaufende Nut von im wesentlichen schwalbenschwanzförmigem Querschnitt ausgebildet ist und an der Oberseite jeder Schwelle in Zuordnung zu den beiden Schienenprofilen ein Ansatz angeordnet ist, der ein in die Nut unter Form- und/oder Reibschluß passendes Querschnittsprofil hat.

Ein derartige Gleisanordnung ist aus der CH—A—310 527 bekannt. Dort sind die Schwellenansätze als Leisten ausgebildet, die aus dem Material der Schwellen bestehen und über die die Schwellen zusammenhängen. Die bekannten Gleisanordnungen stellen also vorgefertigte Gleisabschnitte dar, die der Modelleisenbahner zusammenfügen, aber nicht gestalterisch verändern kann.

Dem gegenüber liegt der Erfindung die Aufgabe zugrunde, eine Gleisanordnung zu schaffen, die der Modelleisenbahner individuell auslegen und bemessen kann.

Zur Lösung dieser Aufgabe ist die Gleisanordnung nach der Erfindung dadurch gekennzeichnet, daß die Nut jedes Schienenprofils in Abständen entsprechend der Schwellenteilung oder eines Bruchteils der Schwellenteilung wenigstens einseitig zu einer Stecköffnung erweitert und der Schwellenansatz als Druckknopf ausgebildet und mit der Stecköffnung verrastbar ist.

Zwar sind druckknopfartige Verbindungselemente aus der US—A—3 160 936 bekannt, jedoch besteht dort nach die Möglichkeit einer Verrastung im Sinne der Erfindung, d.h. einer Verschiebung des in die Stecköffnung eingeführten Druckknopfes entlang einer Nut.

Insbesondere hierdurch hingegen wird es dem Benutzer ermöglicht, aus Schienenprofilen und Schwellen gerade Schienenabschnitte und gekrümmte Schienenabschnitte mit dem jeweils gewünschten Krümmungsradius nach Belieben zusammenzusetzen. Die Schienenprofile können nämlich das alleinige Verbindungsmittel für benachbarte Schwellen darstellen. Durch die Bemessung der Stecköffnungsabstände entsprechend der Schwellenteilung wird sichergestellt, daß die Druckknöpfe jeweils nur geringe Verschiebungswege in den zugehörigen Nuten zurücklegen müssen.

Im übrigen sind keinerlei zusätzliche Befestigungsmittel zum Festlegen der Schienenprofile auf den Schwellen erforderlich. Es kann also nicht zu einer Beschränkung der Bodenfreiheit der Spurkränze kommen. Dies bedeutet, daß maßstabsgetreue Schienenprofile auch dort Anwendung finden können, wo Radsätze mit überdimensionierten Spurkränzen eingesetzt werden. Flache Nachbildungen von Schienenbefestigungen bzw. Schienenklammern ohne eigene Haltefunktion können ggf. auf die Schwelle kraftschlüssig und/oder formschlüssig aufgesteckt oder angeklebt werden. Daher ist das dem Original größenmäßig entsprechende Schienenprofil an beiden Seiten bis hin zum Schienenfuß frei, so daß, wie erwähnt, Radsätze selbst mit vergleichsweise übergroßen Sturkränzen behinderungsfrei auf den Schienen laufen können.

Eine besonders einfache Handhabung der erfindungsgemäßen Gleisanordnung ergibt sich dadurch, daß die Nut jedes Schienenprofils in Abständen entsprechend der Schwellenteilung zu der Stecköffnung erweitert ist. Dadurch wird sichergestellt, daß die Druckknöpfe jeweils nur geringe Verschiebungswege in den zugehörigen Nuten zurücklegen müssen.

Die Nuternweiterung ist dabei vorzugsweise entweder teilkreisförmig oder keilförmig ausgebildet. Anstelle der bei herkömmlichen Gleisanordnungen üblichen, die Schienenfüße übergreifenden Verbindungslaschen sieht die Erfindung zur Herstellung der mechanischen und ggfs. der elektrischen Verbindung zwischen zwei Gleisabschnitten eine bandförmige Verbindungslasche aus elektrisch leitendem Material oder als Isolierverbinder aus nichtleitendem Kunststoff vor, die an der den Schienen zugewandten Flachseite wenigstens einen Ansatz mit einem den Schwellenansätzen entsprechenden Profil und an der den Schwellen zugewandten Seite eine die Schwellenansätze passend aufnehmende Ausnehmnung aufweist, wobei die über ein Band verbundenen Schwellen wenigstens im Anschlußbereich eine um die Banddicke verminderte Höhenabmessung haben.

Weitere Einzelheiten und Vorteile der Erfindung ergeben sich aus der nachfolgenden Beschreibung eines in der Zeichnung dargestellen Ausführungsbeispiels. In der Zeichnung zeigen:

Fig. 1 eine Schnittansicht durch ein Schienenprofil mit den erfindungsgemäßen Befestigungselementen zur Verbindung von Schienenprifol und Schwelle zur, wobei ein auf den Schienenkopf aufgesetztes Reifenprofil eines Rades mit europäischem Spurkranz dargestellt ist;

Fig. 2 eine gegenüber Fig. 1 verkleinerte Horizontalschnittansicht durch den Schienenfuß in Richtung der Pfeile II—II in Fig. 1 mit zwei Schwellen; und

Fig. 3 eine teilweise geschnittenen perspektivische Teilansicht durch die erfindungsgemäße Gleisanordnung im Verbindungsbereich von zwei Gleisabschnitten

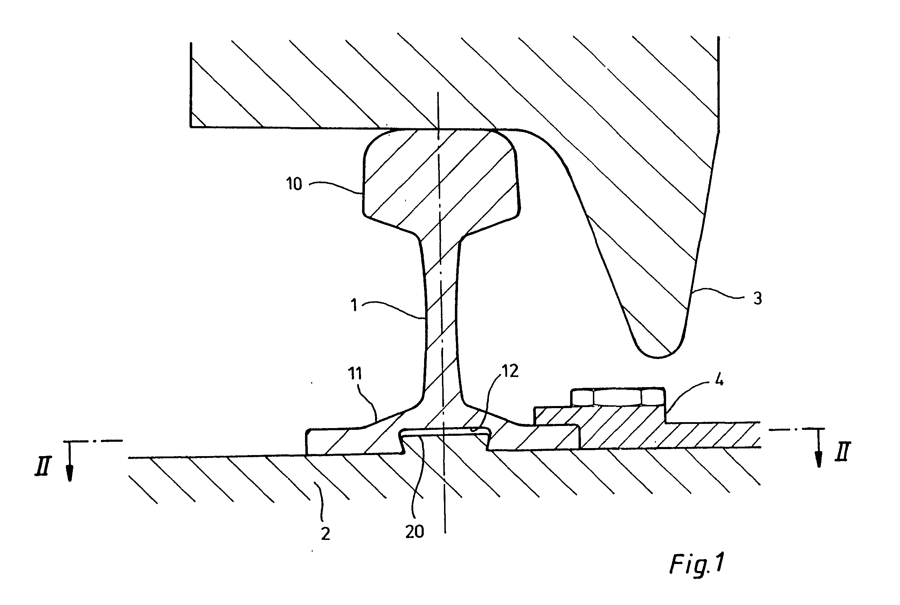

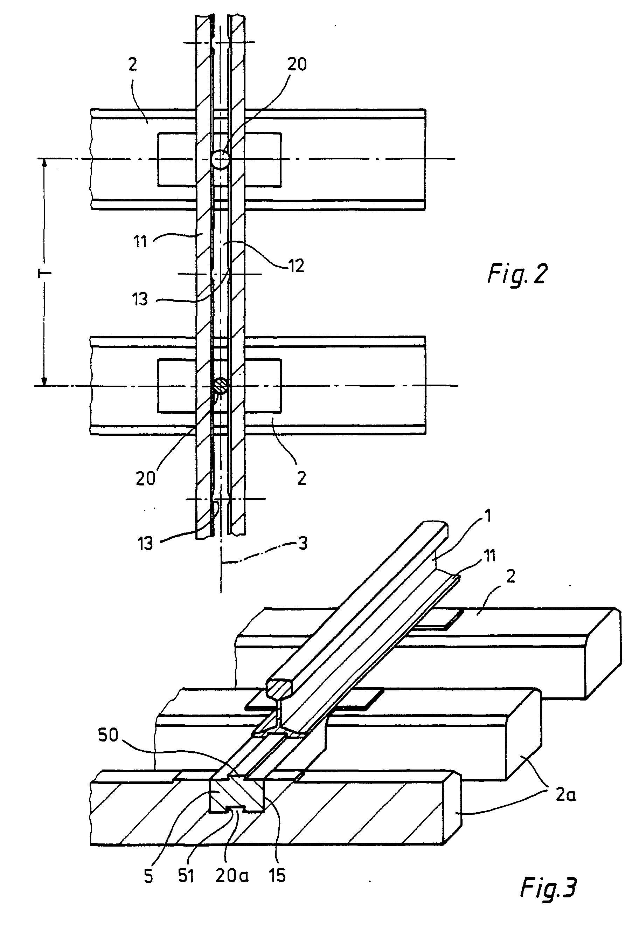

Wie in Fig. 1 zu sehen ist, hat das Schienenprofil 1 einen Schienenkopf 10 konventioneller Ausbildung und einen Schienenfuß 11, in dessen Sohlfläche eine zur Schienenlängsachse 3 (Fig. 2) parallel verlaufende Nut 12 etwa schwalbenschwanzförmigen Querschnitts ausgebildet ist. An der Oberseite jeder Schwelle 2 ist in Zuordnung zum Schienenprofil 1 ein Ansatz 20 angeformt, der ein zur Nut 12 passendes, d.h. ein sich zum äußeren Ende hin etwas erweiterndes Querschnittsprofil hat. Selbstverständlich sind jeder Schwellen zwei Ansätze 20 zugeordnet, deren Mittelabstand der für die Schwelle vorgesehenen Spurweite entspricht. Durch den form- bzw. kraftschlüssigen Eingriff des Schwellenansatzes 20 in die Schienenprofil-Längsnut 12 ist das Schienenprofil 1 ausreichend fest mit allen Schwellen eines Schienenabschnitts verbunden. Zusätzliche, außen am Schienenfuß 11 angreifende Befestigungsmittel, die die Bodenfreiheit des in Fig. 1 dargestellten Radkranzes 3 beeintrachtigen könnten, sind nicht erforderlich. Andererseits können aber flache Nachbildungen von Schienenbefestigungen entsprechend dem Bauteil 4 in Fig. 1 einfach neben und über dem Schienenfuß einseitig oder beidseitig angeklebt oder in geeigneter sonstiger Weise befestigt werden.

Die Nut 12 jedes Schinenfußes 11 ist in gleichmäßigen Abständen entsprechend einem Bruchteil der Schwellenteilung T zu Stecköffnungen 13 erweitert. In diese Stecköffnungen 13 werden die im dargestellten Ausführungsbeispiel als Druckknöpfe 20 gestalteten Schwellenansätze eingerastet. Dies ermöglicht einerseits einer leichte und exakte Lagejustierung zur Einstellung der Schwellenabstände T und andererseits den Zusammenbau eines gekrümmten Gleisabschnitts, wobei die Schwellenansätze 20 an dem kürzeren, innen gelegenen Schienenprofil entsprechend enger gesetzt werden können. In dem in Fig. 2 dargestellten Ausführungsbeispiel sind die Nuterweiterungen teilkreisförmig ausgebildet; andererseits ist aber auch eine keilförmige Ausbildung in Zuordnung zu druckknopfartigen Schwellenansätzen möglich und sinnvoll.

Zur Verbindung zweier Schienenstücke ist gemäß Teildarstellung in Fig. 3 eine bandförmige Verbindungslasche 5 vorgesehen, die üblicherweise aus elektrisch leitendem Material besteht (als Isolierverbinder aus Isoliermaterial, z.B. Kunststoff). Das Band 5 hat an seiner der Schiene 1 zugewandten Flachseite einen im dargestellten Ausführungsbeispiel schwalbenschwanzförmigen Ansatz mit einem dem Schwellenansatz 20 entsprechenden Querschnittsprofil. Dieser schwalbenschwanzförmige Ansatz kann passend in die im Schienenfuß 11 der beiden zu verbindenden Schienenprofile ausgebildeten Nuten 12 eingeschoben werden, so daß der elektrische Stromkreis von einem ersten Schienenabschnitt über das Verbindungsband 5 zum zweiten Schienenabschnitt geschlossen ist. In den Schwellen 2a, die die bandförmige Verbindungslasche 5 aufzunehmen haben, ist eine dem Querschnitt der Verbindungslasche 5 zweckmäßigerweise etwa angepaßte Aufnahmenut 15 ausgebildet. Im Bereich des Nutgrundes ist ein Ansatz 20a entsprechend dem Ansatz 20 ausgebildet, der in eine an der Unterseite des Bandes 5 ausgebildete Ausnehmung 51 passend eingreift. In dem in Fig. 3 dargestellen Ausführungsbeispiel ist der Schwellenansatz 20a am Nutgrund der Schwellen 2a als Feder ausgebildet, die in eine nutförmige Ausnehmung 51 an der Unterseite der bandförmigen Verbindungslasche 5 eingreift.

Anstelle der in der Zeichnung dargestellten Einzelschwellen können auch Schwellenbänder vorgesehen sein, wobei die Verbindungsabschnitte der Schwellen ähnlich der bandförmigen Verbindungslasche 5 verdeckt unterhalb der Schienenprofile angeordnet sein können.

## Patentansprüche

1. Gleisanordnung für Modellbahnen mit zwei Schienenprofilen (1), die auf Schwellen (2, 2a) gehaltert sind, wobei in der Sohlfläche jedes Schienenfußes (11) eine zur Schienenlängsachse (3) parallel verlaufende Nut (12) von im wesentlichen schwalbenschwanzförmigem Querschnitt ausgebildet ist und an der Oberseite jeder Schwelle (2, 2a) in Zuordnung zu den beiden Schhienenprofilen (1) ein Ansatz (20, 20a) angeordnet ist, der ein in die Nut (12) unter Form- und/ oder Reibschluß passedes Querschnittsprofil hat, dadurch gekennzeichnet, daß die Nut (12) jedes Schienenprofils (1) in Abständen entsprechend der Schwellenteilung (T) oder eines Bruchteils der Schwellenteilung wenigstens einseitig zu einer Stecköffnung (13) erweitert und der Schwellenansatz (20, 20a) als Druckknopf ausgebldet und mit der Stecköffnung (13) verrastbar ist.

2. Gleisanordnung nach Anspruch 1, dadurch gekennzeichnet, daß die Nutenweiterung (13) teilkreisförmig ausgebildet ist.

3. Gleisanordnung nach Anspruch 1, dadurch gekennzeichnet, daß die Nuterweiterung (13) keilförmigt ausgebildet ist.

4. Gleisanordnung nach einem der Ansprüche 1 bis 3, dadurch gekennzeichnet, daß zur Verbindung zweier Schienenstücke (1) eine bandförmige Verbindungslasche (5) aus elektrisch leitendem Material vorgesehen ist, die an der den Schienen zugewandten Flachseite wenigstens einen Ansatz (50) eines den Schwellenansätzen (20) entsprechenden Profils und an der den Schwellen (2a) zugewandten Seite eine die Schwellenansätze (20a) passend aufnehmende Ausnehmung (51) aufweist, und daß die über eine bandförmige Verbindungslasche (5) verbundenen Schwellen (2a) wenigstens im Anschlußbereich eine um die Banddicke verminderte Höhenabmessung haben.

5. Gleisanordnung nach einem der Ansprüche 1 bis 4, dadurch gekennzeichnet, daß Nachbildungen (4) von Schienenklammern ohne Haltefunktion auf die Schwellen (2) kraftschlüssig aufgesteckt oder angeklebt sind.

## Revendications

1. Aménagement de voie pour chemin de fer miniature à deux profilés de rail (1) qui sont supportés par des traverses (2, 2a), une rainure (12), de section sensiblement en queue d'aronde, s'étendant parallèlement à l'axe longitudinal (3) du rail, étant ménagée dans la face de base de chaque patin de rail (11) et, sur la face supérieure de chaque traverse (2, 2a), en association avec les deux profilés de rail (1), étant prévue une saillie (20, 20a) qui a un profil de section ajusté à celui de la rainure (12) avec contact de forme et/ou frottement, caractérisé par le fait que la rainure (12) de chaque profilé de rail (1) s'élargit, en des points distants de l'écartement (T) entre traverses ou d'une fraction de cet écartement, en formant, au moins d'un côté, une ouverture pour fiche, et la saillie de traverse (20, 20a) est en forme de bouton-poussoir et est encochable dans l'ouverture pour fiche (13).

2. Améagement de voie selon la revendication 1, caractérisé par le fait que l'élargissement de rainure (13) est de forme semi-circulaire.

3. Améagement de voie selon la revendication 1, caractérisé par le fait que l'élargissement de rainure (13) est en forme de coin.

4. Améagement de voie selon l'une des revendications 1 à 3, caractérisé par le fait que, pour relier deux pièces de rail (1), il est prévu une éclisse (5) en forme de bande, en matériau conducteur de l'électricité, qui présente, sur la face plane tournée vers le rail, au moins une saillie (50) d'un profil correspondant aux saillies (20) des traverses et, sur la face tournée vers la traverse (2a), un évidement (51), bien ajustées les saillies (20a) des traverses et que les traverses (2a) reliées par une éclisse (5) en forme de bande ont, au moins dans la zone de raccordement, une hauteur de valeur réduite de l'épaisseur de la bande.

5. Améagement de voie selon l'une des revendications 1 à 4, caractérisé par le fait que des imitations (4) de crampon de rail, sans fonction de retenue, sont fixéess à force ou collées sur les traverses (2).

**Claims**

1. Track installation for model railways comprising two rails (1) held on crossties, wherein, the bottom of each rail base (11), a groove (12) of substantially dovetail-like cross section running parallel to the longitudinal axis (3) is formed, and wherein on the upper side of each crosstie (2, 2a), in association with the two rails (1), a projection (20, 20a) is formed, which has a cross-sectional profile fitting interlockingly and/or friction-fitted into the groove (12) characterized in that the groove (12) of each track (1) is widened on at least one side at intervals corresponding to the crosstie spacing (T) or any fraction of said crosstie spacing to form a socket (13) and the crosstie projection (20, 20a) is in the form of a button and can be snapped into the socket (13).

2. Track installation according to claim 1, characterized in that the groove widening (13) is in the form of a sector of a circle.

3. Track installation according to claim 1, characterized in that the groove widening (13) is wedge-shaped.

4. Track installation according to any of claims 1 to 3, characterized in that, for the joining of two pieces of rail (1) a connecting link (5) of electrically conductive material is provided, which has on the flat side facing the rails at least one projection (50) of a profile corresponding to the crosstie projections (20) and on the side face the crossties (2a) a recess (51) receiving the crosstie projections (20a) in a fitted manner, and in that the crossties (2a) joined by a strip-like connecting link (5) have at least in the connection area a height diminished by the link thickness.

5. Track installation according to any of claims 1 to 4, characterized in that replicas (4) of rail clamps without a holding function are under frictional contact attached or adhered to the crossties.

Fig.1

EP 0 250 512 B1

Fig.2

Fig.3